# EUROPEAN PATENT APPLICATION

(11) **EP 4 387 021 A1**
(43) Date of publication of application: **19.06.2024**
(21) Application number: 22306874.3
(22) Date of filing: 14.12.2022
(51) Int. Cl.: H02G 1/16

(54) **METHOD FOR REPAIRING A CABLE OUTER SEMICONDUCTING LAYER**

(71) Applicant: Nexans, 92400 Courbevoie (FR)
(72) Inventor: FRISK, Nils-Bertil, 45297 Strömstad (SE); JOHANSSON, Mats, 45290 Strömstad (SE); GRONBERG, Pal, 1776 Halden (NO); GLOSLIE, Jon Sigurd, 1769 Halden (NO)
(74) Representative: Ipsilon

(57) **Abstract**

A method for repairing an electric cable (100), the electric cable (100) comprising an electric conductor, and an insulation system surrounding the electric conductor; wherein the insulation system comprises an inner semiconducting layer, an insulating layer and an outer semiconducting layer (123), wherein a section of the outer semiconducting layer (123) comprises a defect (200); the method comprising the steps of laying a non-stick sheet comprising a cutout window on the cable so that the cutout window surrounds the section comprising the defect (200); applying semiconductive material at least over the cutout window and at most over the non-stick sheet; bonding the semiconductive material to the cable (100); and removing any unbound parts of the semiconductive material.

## Description

### Field of the invention

The present invention relates to a method for repairing a cable's outer semiconducting layer.

### Background

The electric properties of a cable are dependent, amongst other things, on the properties of the insulation system that surrounds the electric conductor. Failure of the insulation system will lead to failure of the cable, which will then need to be repaired, a costly and time-consuming operation.

A typical insulation system comprises an inner semiconducting layer, an insulating layer and an outer semiconducting layer.

Defects, such as damages or pollutants can appear on the outer semiconducting layer of a cable during production or in the field during installation.

Such defects need to be dealt with by removing the defect and repairing the semi-conducting layer to ensure a continued performance of the cable.

CN101741031 discloses the application of a semiconducting adhesive for repairing a semiconducting shield outside a medium-voltage cross-linked cable in repairing a breakage of the semiconducting layer outside the medium-voltage cross-linked cable.

There are other semiconducting tapes that are used in the industry, usually self-adhesive or that need a vulcanization process. There are multiple challenges with these methods:
- The sealing tape is typically not tightly coupled with the insulation layer, which is likely to cause gaps with the insulation and affect the product quality. This is especially problematic for adhesive tape.
- The outer diameter of the insulated core is increased after wrapping.
- The vulcanization step (when used) usually requires the use of a vulcanization tube and may take up to several days.

In order to solve the problems existing in these methods of repairing the outer shielding of the semiconducting wrapping tape, it is necessary to develop a new repairing process for the semiconducting layer. Its operation is simple and convenient, the appearance quality after repairing is good, it has no impact on the cable quality and service life, and it is easy for users to accept.

The present invention attempts to solve this challenge, or at least to improve on existing solutions.

### SUMMARY OF THE INVENTION

The present invention is defined by the appended claims and in the following.

In a first aspect, the present invention relates to a method for repairing an electric cable, the electric cable comprising an electric conductor, and an insulation system surrounding the electric conductor; wherein the insulation system comprises an inner semiconducting layer, an insulating layer and an outer semiconducting layer, wherein a section of the outer semiconducting layer comprises a defect;
the method comprising the steps of
a) laying a non-stick sheet comprising a cutout window on the cable so that the cutout window surrounds the section comprising the defect;
b) applying semiconductive material at least over the cutout window and at most over the non-stick sheet;

In other words, the semiconductive material does not extend beyond an outer periphery of the non-stick sheet.
c) bonding the semiconductive material to the cable; and
d) removing any unbound parts of the semiconductive material providing a repaired outer semiconducting layer.

The term "section comprising the defect" is routinely identified by the person skilled in the art during repair. The section identified is removed, for example using a knife, until no more defect can be seen.

Step c) results in the chemical bonding of the semiconductive material to the cable. The term "unbound parts" refers to the parts of the semiconductive material that are not chemically bonded directly to the cable, for example the part of the semiconductive material over the non-stick sheet. In an embodiment, in step d) any semiconductive material outside of the cutout window is removed after step c).

In an embodiment, the section is the visible defect and a lateral section of 5 cm, for the full depth of the outer semi-conducting layer, in other words, down to the insulation layer.

The term "non-stick sheet" as used herein refers to a sheet made of a material so that the sheet may be separated from the semiconducting layer after step c without the sheet damaging the semiconducting layer outside of the section comprising the defect. The non-stick sheet may preferably be heat-resistant. The non-stick sheet may preferably be applied in any form e.g. mold, sheath or tape.

In an embodiment, the electric cable is a subsea cable. In an embodiment, the electric cable is a DC cable. In an embodiment, the electric cable is an AC cable.

In an embodiment, the non-stick sheet is also removed in step d).

In an embodiment, in step c), bonding the semiconductive material is achieved by heating. In an embodiment, the semiconductive material is heated to or over the melting temperature of the semiconductive material. The heating may be achieved by using a heat gun, heating cables, open flame heating, a warm iron, etc.

In an embodiment, in step c), the semiconductive material is heated to or over 70, 80, 90, 100, 110, 120, 130, 140, 150, 175, 200, 210, 220, 230, 240, 250, 275, 300, 400 or 500°C.

In an embodiment, in step c), the semiconductive material is heated between 70 and 500°C, 100 and 400°C, 110 and 300°C, or 120 and 250°C.

In an embodiment, in step c), the semiconductive material is heated at a speed of at least 20 °C/h, 30 °C/h, 40 °C/h, 50 °C/h, 75 °C/h, 100 °C/h, 200 °C/h, 300 °C/h, 400 °C/h or 500 °C/h.

It is advantageous to heat the semiconductive material fast, to reduce the impact of the heating on the insulation, and at the same time to control the deformation of the semiconductive material. Heating the semiconductive material at a lower temperature will ensure a more even temperature distribution in the semiconductive material.

In an embodiment, the semiconductive material is in the form of a tape of semiconductive material. In an embodiment, the semiconductive material is applied by direct extrusion, or any other technique known in the art.

In an embodiment pressure is applied on the semiconductive material, by wrapping the semiconductive material and the cable with a non-adhesive tape, the tape applying pressure on the semiconductive material.

In an embodiment, the method comprises the step of:
e) stripping the section of outer semiconducting layer comprising the defect.

Here the term "stripping the section" means removing the outer semiconducting layer from the section, for example using a knife.

In an embodiment, the section of the outer semiconducting layer comprising the defect is stripped down to the insulating layer.

In an embodiment, the method further includes the step of:
f) sanding the repaired outer semiconducting layer.

In an embodiment, the steps of the method are done in the order a, b, c, and d.

In an embodiment, the steps of the method are done in the order e, a, b, c, and d.

In an embodiment, the steps of the method are done in the order a, e, b, c, and d.

In an embodiment, the steps of the method are done in the order a, b, c, d and f.

In an embodiment, the steps of the method are done in the order e, a, b, c, d and f.

In an embodiment, the steps of the method are done in the order a, e, b, c, d and f.

When step e) is performed before step a) then step a) will include laying a non-stick sheet comprising a cutout window on the cable so that the cutout window surrounds the section originally comprising the defect.

In an embodiment, the non-stick sheet comprises a Teflon layer.

In an embodiment, the outer semiconducting layer has a diameter after the repair that is at most 120% the diameter of the semiconducting layer before the repair.

In an embodiment, the outer semiconducting layer has a diameter after the repair that is at most equal to the diameter of the semiconducting layer before the repair.

In an embodiment, the electric cable further comprises a water barrier layer, and the method further comprises the step of restoring the water barrier layer.

In an embodiment, the electric cable further comprises a polymeric sheath, and the method further comprises the step of restoring the polymeric sheath.

In a second aspect, the invention relates to an electric cable comprising a semiconducting layer repaired by the method according to the first aspect of the invention.

In a third aspect, the invention relates to an electric joint comprising a semiconducting layer repaired by the method according to the first aspect of the invention.

### SHORT DESCRIPTION OF THE DRAWINGS

In the following description this invention will be further explained by way of exemplary embodiments shown in the drawings:
Fig. 1 is a cross section of an electric cable.
Fig. 2 is an illustration of a non-stick sheet.
Fig. 3a-3e is a side view of a first embodiment of the repair procedure.
Fig. 4a-4f is a side view of a second embodiment of the repair procedure.

### DETAILED DESCRIPTION OF THE INVENTION

The electric properties of a cable are dependent, amongst other things, on the properties of the insulation system that surrounds the electric conductor. Failure of the insulation system will lead to failure of the cable, which will then need to be repaired, a costly and time-consuming operation.

A typical insulation system comprises an inner semiconducting layer, an insulating layer and an outer semiconducting layer.

Defects, such as damages or pollutants can appear on the outer semiconducting layer of a cable during production or in the field during installation. If such defects are left unchecked, they may impact the performance of the cable, and will possibly ultimately lead to cable failure.

The current invention relates to a method for repairing the outer semiconducting layer of a cable.

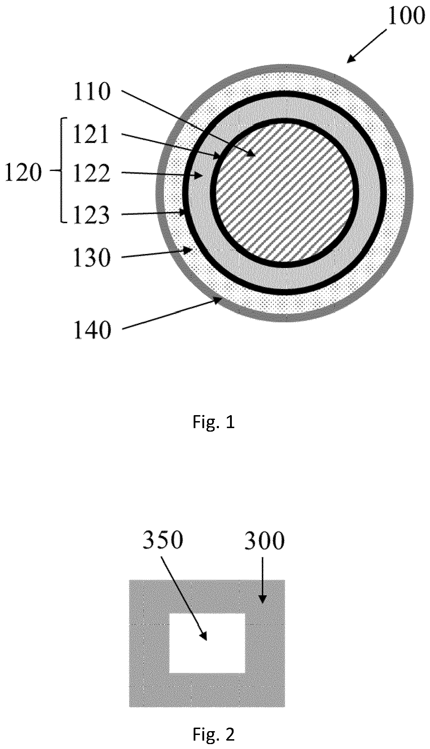

As illustrated in fig. 1, a typical electric cable 100 comprises an electric conductor 110, and an insulation system 120 surrounding the electric conductor 110. The insulation system 120 comprises an inner semiconducting layer 121, an insulating layer 122 and an outer semiconducting layer 123. The electric cable 100 may further comprise a water barrier layer 130 surrounding the insulation system 120. The electric cable 100 may further comprise a polymeric sheath 140, surrounding the insulation system 120 or surrounding the insulation system 120 and the water barrier layer 130.

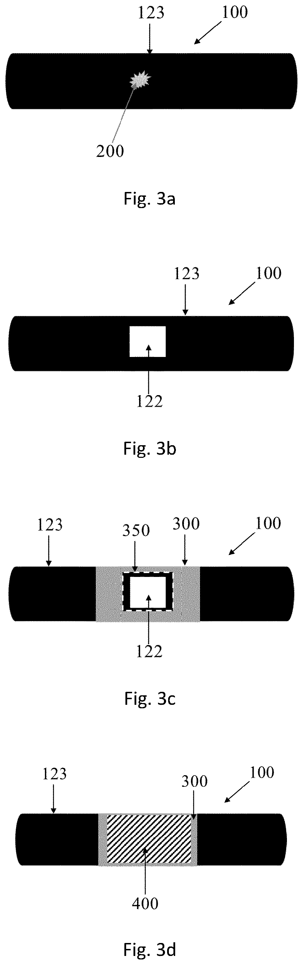

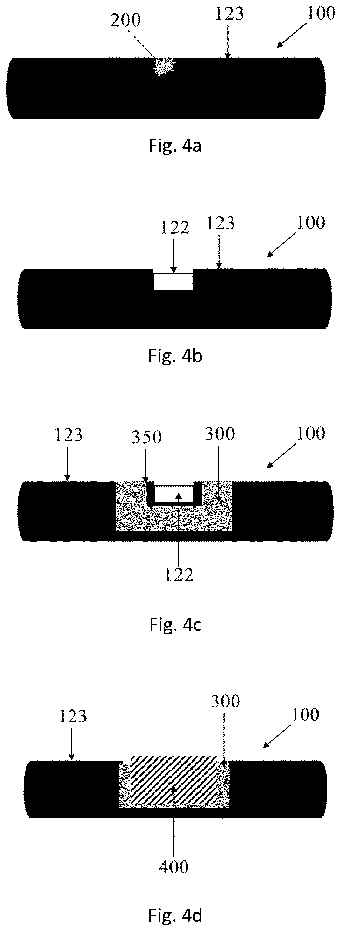

In the cable to be repaired, a section of the outer semiconducting layer 123 comprises a defect 200, as illustrated in fig.3a and 4a.

The inventive method comprises the steps of
a) Laying a non-stick sheet 300 comprising a cutout window 350 on the cable 100 so that the cutout window 350 surrounds the section originally comprising the defect 200, as illustrated in fig.3c and 4c.

Figure 2 illustrates a non-stick sheet 300 with a cutout window 350. An advantage of the inventive method is that the size and shape of the non-stick sheet 300 and of the cutout window 350 can be adapted to the defect 200 and/or section of the outer semiconducting layer 123 to be repaired.

The non-stick sheet 300 may for example comprise a Teflon layer (or even be a Teflon sheet), a polyimide layer (e.g. a Kapton layer), paper (e.g. baking paper), a wood layer, a metal layer, a silicone layer, a glass or glass fiber layer, or a ceramic layer.

Depending on the type of defect, it is not always necessary to remove the affected area. These defects may for example be holes, tears, buckling, overgrowth, cuts, scratches, imprints, scorch, poor plasticization, impurities etc.

The next step in the method comprises
b) Applying a semiconductive material 400 at least over the cutout window 350 and at most over the non-stick sheet 300, as illustrated in fig.3d and 4d.

Here the intention is that the semiconductive material 400 replaces the material in the section comprising the defect 200. Thereafter, the method comprises
c) Bonding the semiconductive material 400 to the cable 100.

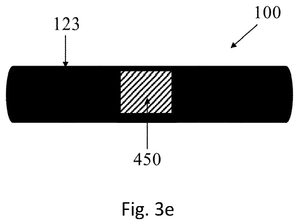

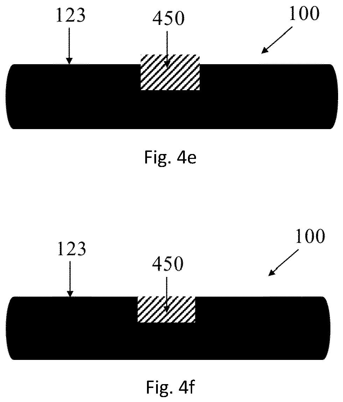

The bonding may for example be achieved by heating the semiconducting material over its melting point. This step is followed by
d) Removing the non-stick sheet 300 and any unbound parts of the semiconductive material, as illustrated in fig.3e and 4e. The semiconductive material 450 is maintained on the repaired cable.

The method may further include the step of:
e) stripping the section of outer semiconducting layer 123 comprising the defect 200 before applying the semiconductive material 400 in step b), as illustrated in fig.3b and 4b.

An advantage of the inventive method is that one does not necessarily need to remove the full thickness of the outer semiconducting layer.

Another advantage of the inventive method is that one does not necessarily need to remove a complete cylindrical section of the outer semiconducting layer to repair it, but that the section can for example be a cylindrical sector containing the defect 200. When a cylindrical sector is removed the non-stick sheet is adapted to form a cylindrical cutout window.

However, in some cases, the section of the outer semiconducting layer 123 comprising the defect 200 may preferably stripped down to the insulating layer 122, for example in order to ensure that the defect does not also affect the insulating layer 122.

The method may further include the step of:
f) sanding the repaired outer semiconducting layer 123, as illustrated in fig.4f.

Step f) is performed after step d). An advantage of this step is that it allows control over the final diameter and the surface quality of the repaired outer semiconducting layer 123/450.

The electric cable 100 may further comprise a water barrier layer 130, surrounding the insulation system 120 and the method may further comprise the step of restoring the water barrier layer 130.

The electric cable 100 may further comprise a polymeric sheath 140, surrounding the insulation system 120 or surrounding the insulation system 120 and the water barrier layer 130 and the method may further comprise the step of restoring the polymeric sheath 140.

In a first example, after identifying a defect on an electric cable, the electric cable comprising an electric conductor, and an insulation system surrounding the electric conductor; wherein the insulation system comprises an inner semiconducting layer, an insulating layer and an outer semiconducting layer; the operator laid a non-stick sheet, here a Teflon foil, comprising a cutout window on the cable so that the cutout window surrounded the section comprising the defect. The operator then removed the visible defect with a knife making sure no more defect was visible. The operator thereafter applied a semiconductive tape of the same material as the outer semiconducting layer of the electric cable, over the cutout window and part of the non-stick sheet. The operator then wrapped the semiconducting tape and the cable with a non-adhesive tape, applying pressure on the tape to be bonded, for example here, a non-adhesive tape with a melting point over the temperature at which the semiconductive material will be heated. The operator then heated the semiconductive tape, by using heating cables, warming the semiconducting tape up to 240 °C in approximately 1 hour, then kept the temperature at 240 °C during 45min. The semiconducting tape was then allowed to cool down to room temperature, for approximately 15min. If desirable, the section being repaired may alternatively be actively cooled. The operator then removed any unbound parts of the semiconductive tape, and sanded the surface of the cable in the section originally comprising the defect, thus providing a repaired outer semiconducting layer.

In this example, the electric properties of the repaired semi-conducting layer were tested and the repaired semi-conducting layer had electrical properties equivalent to portions of the cables having no defects.

## Claims

1. A method for repairing an electric cable (100), the electric cable (100) comprising an electric conductor (110), and an insulation system (120) surrounding the electric conductor (110); wherein the insulation system (120) comprises an inner semiconducting layer (121), an insulating layer (122) and an outer semiconducting layer (123),
wherein a section of the outer semiconducting layer (123) comprises a defect (200);
the method comprising the steps of
a) laying a non-stick sheet (300) comprising a cutout window (350) on the cable (100) so that the cutout window (350) surrounds the section comprising the defect;
b) applying semiconductive material (400) at least over the cutout window (350) and at most over the non-stick sheet (300);
c) bonding the semiconductive material (400) to the cable (100); and
d) removing any unbound parts of the semiconductive material providing a repaired outer semiconducting layer.

2. The method according to claim 1 wherein step c) of bonding the semiconductive material (400) is achieved by heating.

3. The method according to claim 2, wherein the semiconductive material (400) is heated between 70 and 500°C during step c).

4. The method according to any one of claims 2 to 3, wherein the semiconductive material (400) is heated at a speed of at least 20°C/h during step c).

5. The method according to any of the previous claims, wherein the semiconductive material (400) is in the form of a tape of semiconductive material (400).

6. The method according to claim 1 comprising the step of:
e) stripping the section of outer semiconducting layer (123) comprising the defect (200) before applying the semiconductive material (400) in step b).

7. The method according to claim 6 wherein the section of the outer semiconducting layer (123) comprising the defect (200) is stripped down to the insulating layer (122).

8. The method according to any of the previous claims, further including the step of:
f) sanding the repaired outer semiconducting layer (123), after step d).

9. The method according to any of the previous claims, wherein the non-stick sheet comprises a Teflon layer.

10. The method according to any of the previous claims, wherein the outer semiconducting layer (123) has a diameter after the repair that is at most 120% the diameter of the semiconducting layer (123) before the repair.

11. The method according to any of the previous claims, wherein the outer semiconducting layer (123) has a diameter after the repair that is at most equal to the diameter of the semiconducting layer (123) before the repair.

12. The method according to any of the previous claims, wherein the electric cable (100) further comprises a water barrier layer (130), surrounding the insulation system (120) and the method further comprises the step of restoring the water barrier layer (130).

13. The method according to any of the previous claims, wherein the electric cable further comprises a polymeric sheath (140), surrounding the insulation system (120) or surrounding the insulation system (120) and the water barrier layer (130) and the method further comprises the step of restoring the polymeric sheath (140).

14. An electric cable comprising a semiconducting layer (123) repaired by the method according to any one of the claims 1 to 13.
